# EUROPEAN PATENT SPECIFICATION

(11) **EP 3 640 866 B1**
(45) Date of publication and mention of the grant of the patent: **23.04.2025**
(21) Application number: 19191185.8
(22) Date of filing: 12.08.2019
(51) Int. Cl.: G06Q 10/00

(54) **COMMODITY DATA PROCESSING SYSTEM**
SYSTEM ZUR VERARBEITUNG VON WARENDATEN
SYSTÈME DE TRAITEMENT DE DONNÉES DE MARCHANDISES

(30) Priority: 19.10.2018 JP 2018197729
(43) Date of publication of application: 22.04.2020
(73) Proprietor: Toshiba Tec Kabushiki Kaisha, 141-8562 Tokyo (JP)
(72) Inventor: KURATA, Masachika, Shinagawa-ku,, Tokyo 141-8562 (JP)
(74) Representative: Bandpay & Greuter

(56) References cited:
- US-A1- 2017 068 945

## Description

### Field

Embodiments relate to a commodity data processing system.

### BACKGROUND

In recent years, a store which does not have a cash register for a customer to pay money has been put into practical use.

In particular, with the development of technology such as machine learning or computer vision using artificial intelligence (Al), a commodity data processing system has been developed for tracking behavior of a customer in a store by a camera, a sensor or the like. The behavior of the customer is analyzed to automatically register commodities to be purchased by the customer and perform a settlement process for the registered commodities.

In this type of commodity data processing system, the commodities taken by the customer are determined when the customer leaves the store. However, the settlement process is not executed immediately after the determination. The settlement process is executed after a predetermined time has passed since the customer left the store. During this predetermined period of time, the customer can confirm the list of the obtained commodities displayed on his or her smartphone or the like. Then, if a commodity that is not obtained by the customer is contained in the list, the customer can manually remove the commodity from the list before the settlement process is started.

However, in such a system, the customer is not able to confirm the list of the commodities until he or she leaves the store. Therefore, there is a need for a commodity data processing system which allows the customer to confirm the list of commodities obtained, before he or she leaves the store. US 2017/068945 A1 refers to a POS (Point Of Sales) terminal apparatus.

### SUMMARY OF INVENTION

To solve such problem, there is provided a commodity data processing system comprising: a reader configured to read an ID of a customer; a camera configured to acquire images of the customer in a store; a display configured to display information about commodities; and a processor configured to identify the customer with the ID read by the reader when the customer enters the store; track movement of the customer in the store based on the images acquired by the camera and identify one or more commodities taken by the customer in the store; acquire commodity data of each of the identified commodities; after the customer has left the store, perform a settlement process for the commodities based on the acquired commodity data; and control the display to display a list of the commodities before the customer leaves the store.

Preferably, the processor is configured to track the movement of the customer and determine whether the customer faces the display, and control the display to display the list of the commodities when determining that the customer faces the display.

Preferably still, the list includes a name of each commodity and a cancellation button for cancelling the commodity.

Preferably yet, the processor is configured to count a total number of cancellations made by the customer via the cancellation button, and accept the cancellation only when the total number of cancellations is equal to or less than a threshold value.

Suitably, the processor is configured to control the display to display an error message when the total number of cancellations exceeds the threshold value.

Suitably still, the processor is configured to control the display to display the total number of cancellations together with the list of the commodities.

Suitably yet, the system further comprises: a plurality of sensors installed on commodity shelves in the store and detecting movement of commodities displayed on the shelves, wherein the processor is configured to identify each commodity in response to a signal transmitted from one of the sensors that has detected the movement of the commodity.

Typically, the reader is installed at an entrance gate of the store.

Typically still, the display is installed in a digital signage terminal in the store.

Typically yet, the processor is configured to identify the customer based on the image acquired by the camera.

The invention also relates to a method for processing commodity data, the method comprising: reading by a reader an ID of a customer who enters a store; identifying the customer with the ID read by the reader; tracking movement of the customer in the store based on images acquired by a camera and identifying one or more commodities taken by the customer in the store; acquiring commodity data of each of the identified commodities; and after the customer has left the store, performing a settlement process for the commodities based on the acquired commodity data, wherein the method further comprises displaying on a display a list of the commodities before the customer leaves the store.

Preferably, the method further comprises: determining whether the customer faces the display based on the movement of the customer, and displaying on the display the list of the commodities when determining that the customer faces the display.

Preferably yet, the list includes a name of each commodity and a cancellation button for cancelling the commodity.

Preferably still, the method further comprises: counting a total number of cancellations made by the customer via the cancellation button, and accepting the cancellation only when the total number of cancellations is equal to or less than a threshold value.

Suitably, the method according to claim 14, further comprising:
displaying on the display an error message when the total number of cancellations exceeds the threshold value.

Suitably still, the method further comprises:
displaying on the display the total number of cancellations together with the list of the commodities.

Suitably yet, the method further comprises: detecting movement of commodities by a plurality of sensors installed on commodity shelves in the store, wherein each commodity is identified in response to a signal transmitted from one of the sensors that has detected the movement of the commodity.

Typically, the reader is installed at an entrance gate of the store.

Typically still, the display is installed in a digital signage terminal in the store.

The invention also concerns a commodity data processing system comprising: a first computing device installed at an entrance of a store and comprising a reader configured to read an ID of a customer who enters the store; a second computing device comprising a camera configured to acquire an image of the customer in the store, identify the customer with the ID read by the first computing device, and track movement of the customer in the store based on the images acquired by the camera; a third computing device configured to identify one or more commodities taken by the customer in the store based on the movement tracked by the second computing device; a fourth computing device configured to manage commodity data of each of the commodities identified by the third computing device; a fifth computing device configured to perform, after the customer has left the store, a settlement process for the commodities based on the acquired commodity data; and a sixth computing device configured to display a list of the commodities before the customer leaves the store.

The invention further relates to a computer program comprising instructions which, when the program is executed by a computer, cause the computer to carry out the steps of the method described above.

The invention further concerns a computer-readable medium having stored thereon the computer program described above.

### DESCRIPTION OF THE DRAWINGS

The above and other objects, features and advantages of the present invention will be made apparent from the following description of the preferred embodiments, given as non-limiting examples, with reference to the accompanying drawings, in which:
A 0008.
FIG. 1 is a block diagram showing a configuration of a commodity data processing system according to one embodiment.
FIG. 2 shows a commodity record of a commodity database stored in the commodity data processing system.
FIG. 3 shows a member record of a member database stored in the commodity data processing system.
FIG. 4 is a block diagram showing a configuration of a gate device in the commodity data processing system.
FIG. 5 is a schematic diagram showing a data structure of an entry command generated by the gate device.
FIG. 6 is a block diagram of a behavior tracking device in the commodity data processing system.
FIG. 7 is a schematic diagram showing data structures of various commands generated by the behavior tracking device.
FIG. 8 is a flowchart of operations performed by the behavior tracking device.
FIG. 9 is a block diagram of a commodity identification device in the commodity data processing system.
FIG. 10 is a schematic diagram showing data structures of commodity purchase and commodity return commands generated by the commodity identification device.
FIG. 11 is a block diagram of a settlement device in the commodity data processing system.
FIG. 12 shows a data structure of a virtual cart read command generated by the settlement device.
FIG. 13 is a block diagram of a virtual cart device in the commodity data processing system.
FIG. 14 shows a data structure of a data record stored in a commodity list area of a virtual cart stored in the virtual cart device.
FIG. 15 is a block diagram of a cart confirmation device in the commodity data processing system.
FIG. 16 shows a data structure of a commodity cancellation command generated by the cart confirmation device.
FIG. 17 is a schematic diagram showing an example of a screen displayed on a digital signage terminal.
FIG. 18 is a schematic diagram showing an example of a screen displayed on a digital signage terminal.
FIG. 19 is a schematic diagram showing an example of a screen displayed on a digital signage terminal.
FIG. 20 is a schematic diagram showing an example of a message displayed on a digital signage terminal.

### DETAILED DESCRIPTION

In one embodiment, the commodity data processing system includes a reader configured to read an ID of a customer, a camera configured to acquire images of the customer in a store, a display configured to display information about commodities, and a processor configured to identify the customer with the ID read by the reader when the customer enters the store, track movement of the customer in the store based on the images acquired by the camera and identify one or more commodities taken by the customer in the store, acquire commodity data of each of the identified commodities, perform a settlement process for the commodities based on the acquired commodity data after the customer has left the store, and control the display to display a list of the commodities before the customer leaves the store.

A commodity data processing system according to an embodiment will be described below with reference to the drawings. In an embodiment, when a customer enters a store from the entrance gate, takes a commodity to be purchased from among commodities displayed in the sales room, and leaves the store from the exit gate with the commodity, an article data processing system can automatically register the commodity and perform a settlement process for the commodity.

In the present system, it is assumed that the customers have completed membership registration in advance. A unique member ID is issued to each member. The member can confirm a code symbol representing the member ID of the user, which is displayed by an application program on his or her portable information terminal such as a smartphone. The code symbol is, for example, a bar code. The code symbol may be, for example, a two-dimensional data code.

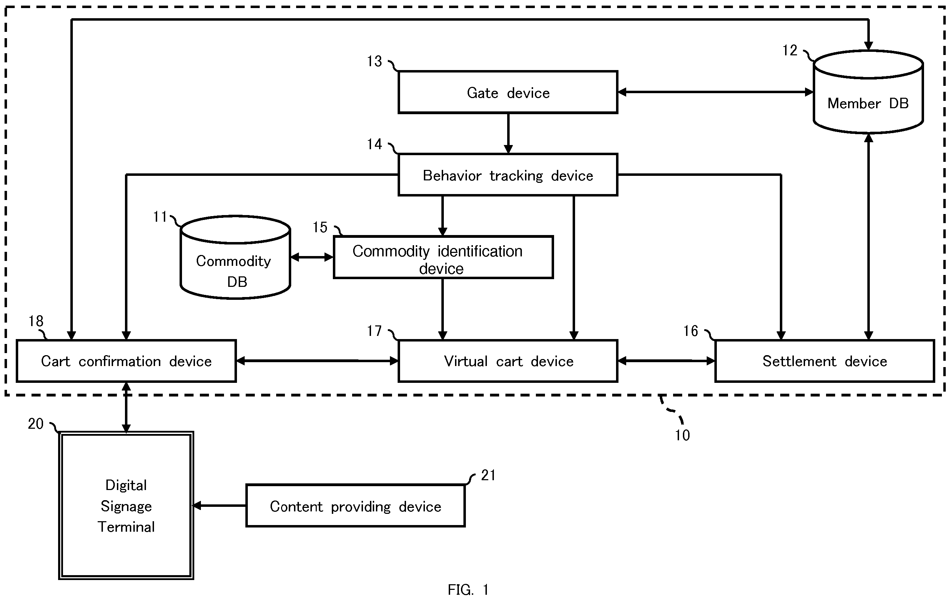

FIG. 1 is a block diagram showing a configuration of a commodity data processing system 10 according to one embodiment. The commodity data processing system 10 includes a commodity database 11, a member database 12, a gate device 13, a behavior tracking device 14, a commodity identification device 15, a settlement device 16, a virtual cart device 17, and a cart confirmation device 18. The commodity database 11 is connected to the commodity identification device 15. The member database 12 is connected to the gate device 13, the settlement device 16, and the cart confirmation device 18. The gate device 13 is connected to the behavior tracking device 14. The behavior tracking device 14 is connected to the commodity identification device 15, the settlement device 16, the virtual cart device 17, and the cart confirmation device 18. The commodity identification device 15, the settlement device 16 and the cart confirmation device 18 are each connected to the virtual cart device 17.

The cart confirmation device 18 is connected to a digital signage terminal 20. The digital signage terminal 20 is a kind of display device that displays contents provided from a content providing device 21. An example of the contents is an advertisement image. The digital signage terminal 20 is installed in a sales room. A floor is a space in which a commodity shelf is installed. A plurality of kinds of commodities are sorted and displayed for each of a plurality of kinds of commodities in a commodity shelf.

The digital signage terminal 20 is installed at a place different from the commodity shelf. The number of the digital signage terminals 20 is not limited to 1. A plurality of digital signage terminals 20 may be installed in the sales room. When a plurality of digital signage terminals 20 are installed in a sales room or a shopping floor of a store, the cart confirmation device 18 is provided for each digital signage terminal 20 in the digital signage terminal 20.

The commodity database 11 stores data relating to each commodity sold in the sales room. The data is generated in a certain format and stored in the commodity database 11. Hereinafter, the data generated in the format and stored in the commodity database 11 will be referred to as commodity record 11R.

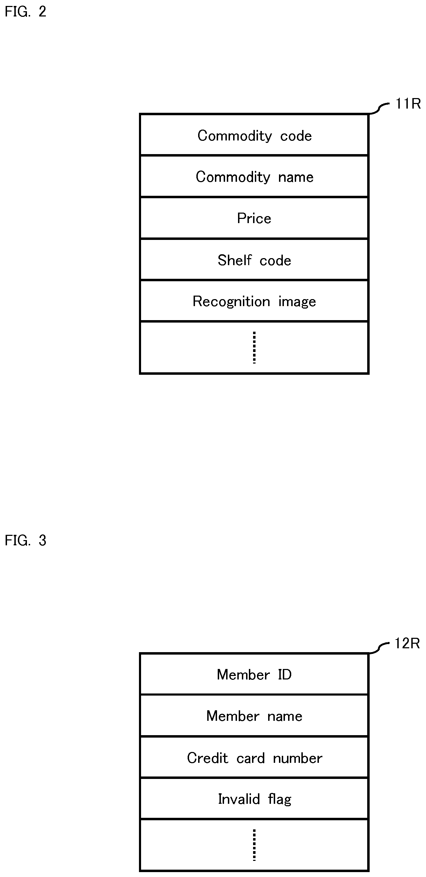

FIG. 2 is a schematic diagram showing a data structure of the commodity record 11R. As shown in the figure, the commodity record 11R includes data items such as a commodity code, a commodity name, a price, a shelf code, and an image for recognition. The commodity code is a commodity unique code set for each commodity in order to identify each commodity. The commodity name is a name of the commodity, and the price indicates a unit price of the commodity. The shelf code is a unique code set for each section of the commodity shelf on which the commodity is displayed. The recognition image is data of an image obtained by photographing the commodity. The recognition image may be an image that includes the entire commodity or a part of the commodity.

The member database 12 stores data relating to customers who have been registered as members for shopping in the store. The data is generated in a certain format and stored in the member database 12. Hereinafter, the data generated in the format and stored in the member database 12 is referred to as member record 12R.

FIG. 3 is a schematic diagram showing a data structure of the member record 12R. As shown in the figure, the member record 12R includes data items such as a member ID, a member name, a credit card number, an invalid flag, and the like. As described above, the member ID is a member specific code assigned to each member in order to identify the member. The member name is the name of the member, and the credit card number is the number of a credit card used in the settlement by the member. The invalid flag is 1-bit data for setting whether or not to invalidate the member record 12R. In the present embodiment, when the invalid flag is "1", the member record 12R is invalid. For example, when a member identified by the member ID is invalid and his or her entry to the store is prohibited, the invalid flag of the member record 12R is set to "1".

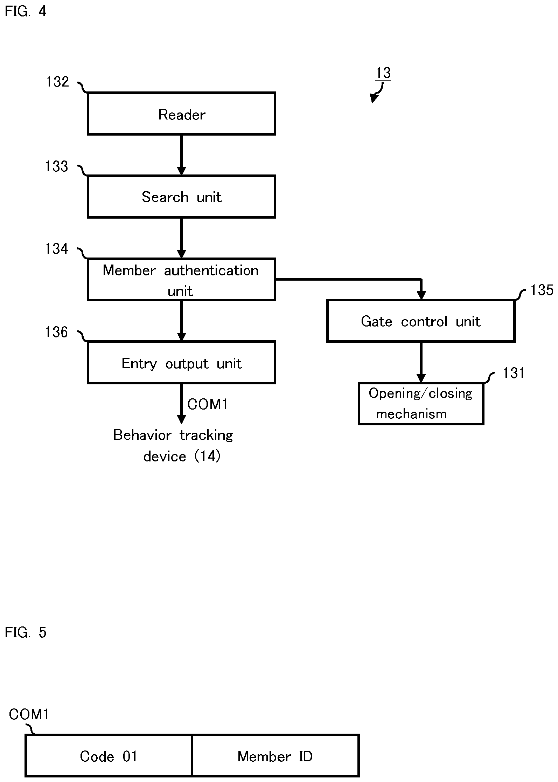

FIG. 4 is a block diagram showing a configuration of the gate device 13. The gate device 13 includes an opening/closing mechanism 131 for an entrance gate, a reader 132, a search unit 133, a member authentication unit 134, a gate control unit 135, and an entry output unit 136.

The opening and closing mechanism 131 opens and closes the entrance gate to the floor. The entrance gate is closed in the default state. The opening/closing mechanism 131 temporarily opens the entrance gate by receiving an open signal from the gate control unit 135. The entrance gate may be opened to allow entry of a customer onto the floor.

The reader 132 is a device for reading code symbols displayed on a display of an information terminal such as a smartphone. As described above, a code symbol representing the member ID unique to the member is displayed on the information terminal owned by the member. The reader 132 is provided outside the entrance gate to read this code symbol.

The search unit 133 searches the member database 12. When the code symbol representing the member ID is read by the reader 132, the search unit 133 searches the member database 12 for the member record 12R by using the member ID as the search keyword. The search unit 133 notifies the member authentication unit 134 of the search result.

The member authentication unit 134 receives the search result from the search unit 133 and determines whether or not to approve the entrance of the customer. When the member record 12R including the member ID used as the search keyword is detected from the member database 12, the member authentication unit 134 checks the invalid flag of the member record 12R. When the invalid flag is "0", that is, when the member record 12R is valid, the member authentication unit 134 approves the entrance of the customer as a valid member. On the other hand, when the member record 12R cannot be detected from the member database 12 or when the invalid flag of the detected member record 12R is "1", that is, when the member record 12R is invalid, the member authentication unit 134 denies the entrance of the customer. The member authentication unit 134 notifies the gate control unit 135 and the entry output unit 136 of the authentication result.

When the authentication result notified by the member authentication unit 134 indicates approval of the entrance of the member, the gate control unit 135 outputs an open signal to the opening/closing mechanism 131. When the authentication result is the one which denies the entrance of the member, the gate control unit 135 does not output an open signal to the opening/closing mechanism 131.

The entry output unit 136 generates the entry command COM1 when the authentication result notified by the member authentication unit 134 indicates the approval of the entrance. The entrance output unit 136 outputs the entry command COM1 to the behavior tracking unit 14. The entry output unit 136 does not generate the entry command COM1 when the authentication result notified by the member authentication unit 134 indicates the denial of the entrance of the member. Therefore, the entry command COM1 is not output to the behavior tracking device 14.

FIG. 5 is a schematic diagram showing a data structure of the entry command COM1. As shown in the figure, the entry command includes a command code 01 and a member ID. The command code 01 is a code for specifying that the command is the entry command COM1. The member ID is the member ID of the member whose entrance is approved by the member authentication unit 134. That is, the member ID obtained from the code symbol read by the reader 132 is included in the entry command COM1.

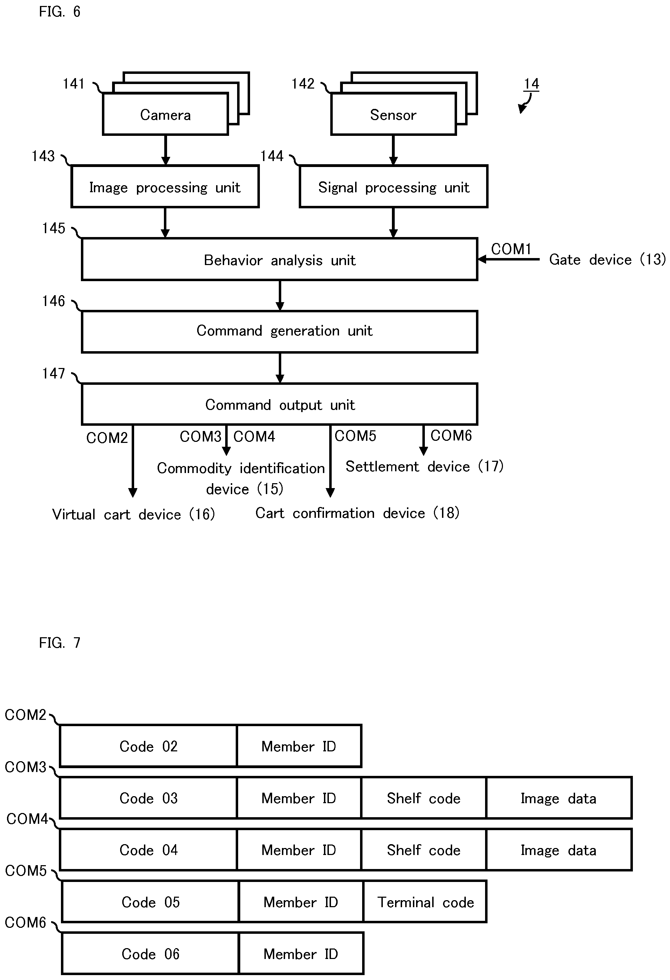

FIG. 6 is a block diagram showing a configuration of the behavior tracking device 14. The behavior tracking device 14 includes a plurality of cameras 141, a plurality of sensors 142, an image processing unit 143, a signal processing unit 144, a behavior analysis unit 145, a command generation unit 146, and a command output unit 147. The plurality of cameras 141 are appropriately arranged on a ceiling or the like of the sales room in the store so as to cover the entire area of the sales area as a photographing area.

The plurality of sensors 142 are arranged at each section of the commodity shelf. The sensor 142 detects that a commodity displayed on the commodity shelf has been taken out. The sensor 142 further detects that the commodity has been returned to the commodity shelf. For example, the sensor 142 is an infrared sensor, a pressure sensor, a weight sensor, or the like, or a combination thereof.

The image processing unit 143 inputs an image captured by each camera 141. The image processing unit 143 generates image data necessary for behavior analysis performed by the behavior analysis unit 145 from the image captured by each camera 141, and outputs the generated image data to the behavior analysis unit 145.

The signal processing unit 144 inputs a detection signal from each sensor 142. The signal processing unit 144 selects the detection signal necessary for the behavior analysis performed by the behavior analysis unit 145 from the detection signal from each sensor 142, and outputs the selected detection signal to the behavior analysis unit 145.

The behavior analysis unit 145 receives the entry command COM1 transmitted from the gate device 13 to the behavior tracking device 14. The behavior analysis unit 145 captures the image data from the image processing unit 143 and fetches the detection signal from the signal processing unit 144. Based on the image data and the detection signal, the behavior analysis unit 145 analyzes the behavior of the member in the sales room, who is specified by the member ID included in the entry command COM1. Specifically, the behavior analysis unit 145 keeps track of movement within the sales room of the member who has entered the floor from the entrance gate, until the member leaves the store from the exit gate. The behavior analysis unit 145 detects the action of the member taking out the commodity from the commodity shelf while tracking his or her movement, the action of the member returning the commodity to the commodity shelf, and the action of the member facing the screen of the digital signage terminal 20. The detection of such an action can be made by using existing techniques such as machine learning or computer vision using an existing AI technologies.

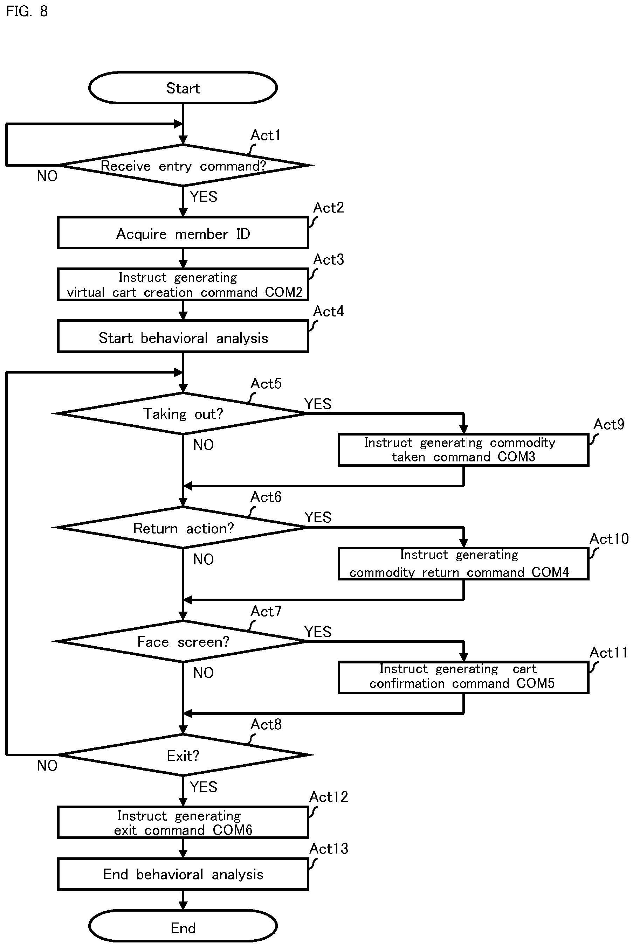

FIG. 8 is a flowchart of operations performed by the behavior analysis unit 145 from when a member enters at the entrance gate until when he or she exits through the exit gate. The behavior analysis unit 145 waits for the entry command COM1 as Act 1. When receiving the entry command COM1 from the gate device 13, the behavior analysis unit 145 determines YES in Act 1, and proceeds to Act 2. The behavior analysis unit 145 acquires the member ID from the entry command COM1 as Act 2.

The behavior analysis unit 145 instructs the command generating unit 146 to generate a virtual cart creation command COM2 in Act 3. The instruction to generate the virtual cart creation command COM2 includes the member ID acquired from the entry command COM1. The details of the virtual cart creation command COM2 will be described later.

The behavior analysis unit 145 which has instructed generating the virtual cart creation command COM2 starts behavior analysis of the member identified by the member ID acquired from the entry command COM1 in Act 4. Then, the behavior analysis unit 145 determines whether or not the member's action of taking out the commodity from the commodity shelf is detected, in Act 5. When the member's action of taking out the commodity from the commodity shelf is not detected, the behavior analysis unit 145 determines NO in Act 5, and proceeds to Act 6. The behavior analysis unit 145 determines whether or not the member's action of returning the commodity to the commodity shelf is detected as Act 6. When the member's action of returning the commodity to the commodity shelf is not detected, the behavior analysis unit 145 determines NO in Act 6, and proceeds to Act 7. The behavior analysis unit 145 determines whether or not the member faces the screen of the digital signage terminal 20 as Act 7. When the member does not face the screen of the digital signage terminal 20, the behavior analysis unit 145 determines NO in Act 7, and proceeds to Act 8. The behavior analysis unit 145 determines whether or not the member exits through the exit gate in Act 8. When the member does not exit, the behavior analysis unit 145 determines NO in Act 8, and the process returns to Act 5.

In this manner, the behavior analysis unit 145 keeps track of the behavior of the member in Act 5 to Act 8. That is, the behavior analysis unit 145 detects an action of the member taking out the commodity from the commodity shelf, returning the commodity to the commodity shelf, and facing the screen of the digital signage terminal 20. The behavior analysis unit 145 continues the behavior analysis until the member exits through the exit gate.

When the behavior analysis unit 145 detects the action of taking out the commodity from the commodity shelf, the behavior analysis unit 145 determines YES in Act 5, and proceeds to Act 9. The behavior analysis unit 145 instructs the command generation unit 146 to generate a commodity taken command COM3 as Act 9. The instruction to generate the commodity taken command COM3 includes the member ID of the member whose behavior is being tracked and image data and a shelf code when the member's action of taking out the commodity from the commodity shelf is detected. The shelf code is specified from a detection signal when the member's action of taking out the commodity from the commodity shelf is detected. The shelf code identifies a section of a commodity shelf on which a sensor, which is a transmission source of the detection signal, is provided. When Act 9 is completed, the process proceeds to Act 6.

When the behavior analysis unit 145 detects the action of returning the commodity to the commodity shelf, the behavior analysis unit 145 determines YES in Act 6, and proceeds to Act 10. The behavior analysis unit 145 instructs the command generation unit 146 to generate a commodity return command COM4 as Act 10. The instruction to generate the commodity return command COM4 includes the member ID of the member whose behavior is being tracked and the image data and shelf code when the member's action of returning the commodity to the commodity shelf is detected. When the process of Act 10 is completed, the behavior analysis unit 145 proceeds to Act 7.

When the behavior analysis unit 145 detects that the member faces the screen of the digital signage terminal 20, it determines YES in Act 7, and proceeds to Act 11. The behavior analysis unit 145 instructs the command generation unit 146 to generate a cart confirmation command COM5 as Act 11. The instruction to generate the cart confirmation command COM5 includes a terminal code together with the member ID of the member being tracked. The terminal code is a code for specifying the digital signage terminal 20 which the member is facing. When a plurality of digital signage terminals 20 are installed in a sales room, different terminal codes are set to the respective digital signage terminals 20. When the behavior analysis unit 145 detects that the member faces the screen of one of the digital signage terminals 20, the behavior analysis unit 145 issues the cart confirmation command including the terminal code of the digital signage terminal 20. When the process of Act 11 is completed, the behavior analysis unit 145 proceeds to Act 8.

When the behavior analysis unit 145 detects that the member has exited from the exit gate to the outside of the store, that is, the member has left the store, the behavior analysis unit 145 determines YES in Act 8, and the process proceeds to Act 12. The behavior analysis unit 145 instructs the command generation unit 146 to generate an exit command COM6 as Act 12. The instruction to generate the exit command COM6 includes the member ID of the member whose behavior has been tracked. When the process of Act 12 is completed, the behavior analysis unit 145 terminates the behavior analysis of the member identified by the member ID as Act 13.

Referring to Fig. 6, the details of the command generation unit 146 are described below.

When the command generation unit 146 receives the instruction to generate the virtual cart creation command COM2 from the behavior analysis unit 145, the command generation unit 146 generates the virtual cart creation command COM2. When the command generation unit 146 receives the instruction to generate the commodity taken command COM3 from the behavior analysis unit 145, the command generation unit 146 generates the commodity taken command COM3. When the command generation unit 146 receives the instructions to generate the commodity return command COM4 from the behavior analysis unit 145, the command generation unit 102 generates the commodity return command COM4. When receiving the instruction to generate the cart confirmation command COM5 from the behavior analysis unit 145, the command generation unit 146 generates the cart confirmation command COM5. When the command generation unit 146 receives the instruction to generate the exit command COM6 from the behavior analysis unit 145, the command generation unit 102 generates the exit command COM6.

FIG. 7 is a schematic diagram showing structures of the commands COM2-COM6 generated by the command generation unit 146. As shown in the figure, the cart creation command COM2 includes a command code 02 and a member ID. The command code 02 is a code for specifying that the command is the cart creation command COM2. The member ID is the one included in the instruction to generate the virtual cart creation command COM2, received from the behavior analysis unit 145.

The commodity taken command COM3 includes a command code 03, a member ID, a shelf code, and image data. The command code 03 is a code for specifying that the command is the commodity taken command COM3. The member ID, the shelf code and the image data are the ones included in the instruction to generate the commodity taken command COM3, received from the behavior analysis unit 145.

The commodity return command COM4 includes a command code 04, a member ID, a shelf code, and image data. The command code 04 is a code for specifying that the command is the commodity return command COM4. The member ID, the shelf code and the image data are the ones included in the instruction to generating the commodity return command COM4, received from the behavior analysis unit 145.

The cart confirmation command COM5 includes a command code 05, a member ID, and a terminal ID. The command code 05 is a code for specifying that the command is the cart confirmation command COM5. The member ID and the terminal code are the ones included in the instructions to generate the cart confirmation command COM5, received from the behavior analysis unit 145.

The exit command COM6 includes a command code 06 and a member ID. The command code 06 is a code for specifying that the command is the exit command COM6. The member ID is the one included in the instruction to generate the exit command COM6, received from the behavior analysis unit 145.

Referring back to FIG. 6, the details of the command output unit 147 are described below.

The command output unit 147 outputs the commands COM2-COM6 generated by the command generation unit 146 to other devices. For example, the command output unit 147 outputs the cart creation command COM2 to the virtual cart device 17. The command output unit 147 outputs the commodity taken command COM3 and the commodity return command COM4 to the commodity identification device 15. The command output unit 147 outputs the cart confirmation command COM5 to the cart confirmation device 18. The command output unit 147 outputs the exit command COM6 to the settlement device 16.

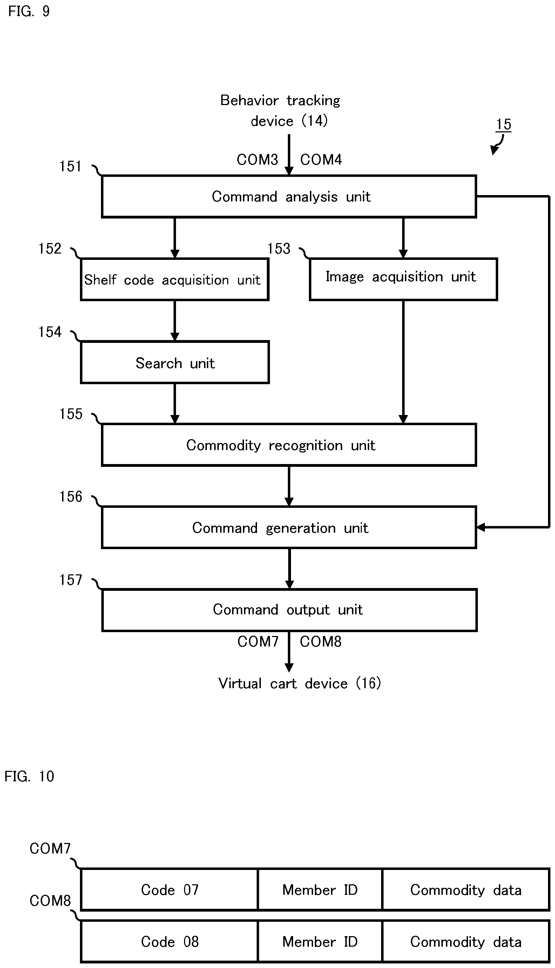

FIG. 9 is a block diagram showing a configuration of the commodity identification device 15. The commodity identification device 15 includes a command analysis unit 151, a shelf code acquisition unit 152, an image acquisition unit 153, a search unit 154, a commodity recognition unit 155, a command generation unit 156, and a command output unit 157. The command analysis unit 151 analyzes the command received from the behavior tracking device 14. Based on the command code included in the command, the command analysis unit 151 identifies whether the command is the commodity taken command COM3 or the commodity return command COM4, and notifies the command generation unit 156 of the identification result.

The shelf code acquisition unit 152 acquires a shelf code from the commodity taken command COM3 or the commodity return command COM4 analyzed by the command analysis unit 151. The image acquisition unit 153 acquires image data included in the commodity taken command COM3 or the commodity return command COM4 analyzed by the command analysis unit 151.

The search unit 154 searches the commodity database 11 for one or more commodity records 11R including the shelf code acquired by the shelf code acquisition unit 152, by using the acquired shelf code as a search keyword. The search unit 154 reads the commodity records 11R including the shelf code, and outputs the commodity records 11R to the commodity recognition unit 155.

The commodity recognition unit 155 calculates the similarity between the recognition image included in each commodity record 11R received from the search unit 154 and the image acquired by the image acquisition unit 153. When the commodity recognition unit 155 identifies one commodity record 11R having the degree of similarity equal to or greater than a predetermined value, the commodity recognition unit 155 outputs commodity data such as a commodity ID, a commodity name, a price and the like included in the identified commodity record 11R to the command generation unit 156.

The command generation unit 156 generates a commodity purchase command COM7 based on the commodity data received from the commodity recognition unit 155 when the identification result notified from the command analysis unit 151 indicates the commodity taken command COM3. When the identification result notified from the command analysis unit 151 indicates the commodity return command COM4, the command generation unit 156 generates a commodity return command COM8 based on the commodity data received from the commodity recognition unit 155.

FIG. 10 is a schematic diagram showing a data structure of the commodity purchase command COM7 and the commodity return command COM8 generated by the command generation unit 156. As shown in the figure, the commodity purchase command COM7 includes a command code 07, a member ID, and commodity data. The command code 07 is a code for specifying that the command is the commodity purchase command COM7. The member ID is the one included in the commodity taken command COM3 analyzed by the command analysis unit 151. The commodity data includes a commodity code, a commodity name, and a price, which are supplied from the commodity recognition unit 155.

The commodity return command COM8 includes a command code 08, a member ID, and commodity data. The command code 08 is a code for specifying that the command is the commodity return command COM8. The member ID is the one included in the commodity return command COM4 analyzed by the command analysis unit 151. The commodity data includes a commodity name, a price, and the like given from the commodity recognition unit 155. The commodity data may include a commodity code, a commodity name, a combination of a commodity code and a price, or the like. The commodity data may include a commodity code alone.

Referring back to FIG. 9, details of the command output unit 157 is described below. The command output unit 157 outputs to the virtual cart device 17 the commodity purchase command COM7 and the commodity return command COM8, which have been generated by the command generation unit 156.

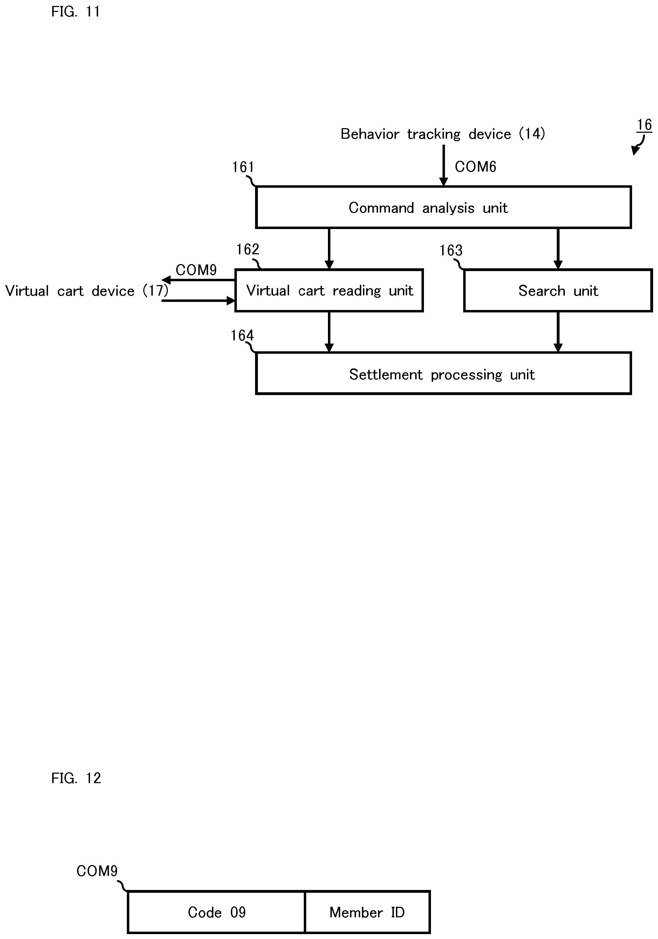

FIG. 11 is a block diagram showing a configuration of the settlement device 16. The settlement device 16 includes a command analyzing unit 161, a virtual cart reading unit 162, a search unit 163, and a settlement processing unit 16. The command analysis unit 161 analyses the exit command COM6 received from the behavior tracking device 14.

The virtual cart reading unit 162 generates a virtual cart reading command COM9 with the member ID included in the exit command COM6 analyzed by the command analyzing unit 161. The virtual cart reading unit 162 outputs the virtual cart reading command COM9 to the virtual cart device 17 to read the data of the virtual cart stored in the virtual cart device 17. The virtual cart stores the data of the commodity taken by the member specified by the member ID in the sales room. The virtual cart reading unit 162 transmits the data of the virtual cart to the settlement processing unit 164.

FIG. 12 is a schematic diagram showing a data structure of the virtual cart read command COM9. As illustrated in the figure, the virtual cart read command COM9 includes a command code 09 and a member ID. The command code 09 is a code for specifying that the command is the virtual cart read command COM9. The member ID is the one included in the exit command COM6 analyzed by the command analysis unit 161.

Referring back to Fig. 11, the search unit 163 searches the member database 12 for a member record 12R including the member ID specified by the exit command COM6 analyzed by the command analysis unit 161, by using the member ID as a search keyword. The search unit 163 reads the member record 12R including the member ID, and provides the data of the member record 12R to the settlement processing unit 164.

The settlement processing unit 164 performs a settlement process based on the data of the virtual cart and the data of the member record 12R. The data of the virtual cart contains the data of the commodity taken by the member identified by the member ID in the sales room. The data of the member record 12R includes the card number of the credit card used by the member specified by the member ID. The settlement processing unit 164 executes the settlement process by the credit card on the commodity taken by the customer based on the commodity data and the card number of the credit card. Any known technique can be used to perform the settlement process by the credit card. A receipt associated with the settlement process may be issued by an existing electronic receipt system.

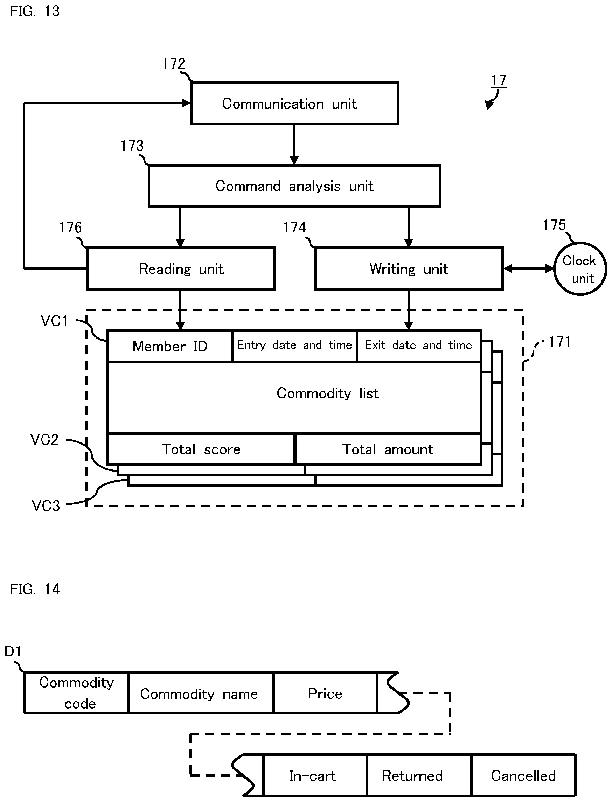

FIG. 13 is a block diagram showing a configuration of the virtual cart device 17. The virtual cart device 17 includes a memory 171, a communication unit 172, a command analysis unit 173, a writing unit 174, a clock unit 175, and a reading unit 176. The clock unit 175 acquires the current date and time.

The memory 171 is capable of storing data for a plurality of virtual carts VC1, VC2, VC3, ..., VCn. The virtual carts VC1-VCn each operate like a work memory having an area for storing data items such as a member ID, an entry date and time, an exit date and time, a commodity list, a total number of commodities, a total amount, and the like. In the area of the member ID, the member ID of the member whose behavior is tracked by the behavior tracking device 14 is stored. The date and time when the member has entered the selling room is stored in the area of the entry date and time. The date and time when the member has exited the sales room is stored in the area of the exit date and time. In the area of the commodity list, data relating to commodities taken by the same member in the sales room is stored. In the area of the total number of commodities, the total number of commodities taken by the same member in the sales room is stored. In the area of the total amount, the total amount of the commodities taken by the same member in the sales room is stored.

FIG. 14 is a schematic diagram showing a data structure of data record D1 stored in the area of the commodity list. The data record D1 is generated every time the member obtains a commodity, and is stored in the area of the commodity list. The data record D1 includes an in-cart flag, a returned flag, and a cancelled flag in addition to the commodity code, commodity name, price, and the like. The in-cart flag is set to "1" when the commodity of the corresponding commodity data is in an in-cart state. The returned flag is set to "1" when the commodity of the corresponding commodity data is in a returned state. The cancelled flag is set to "1" when the commodity of the corresponding commodity data is in a cancelled state. For example, the in-cart state indicates a state in which a member has taken a commodity from a commodity shelf and is holding it in his or her shopping bag or the like. The returned state indicates a state in which the member has returned the commodity taken from the commodity shelf to the original shelf. The cancellation state indicates a state in which the commodity has been removed from the commodity list by the member's cancellation operation.

Referring back to FIG. 13, details of the communication unit 172 and the command analysis unit 173 are described below.

The communication unit 172 communicates with the behavior tracking device 14, the commodity identification device 15, the settlement device 16, and the cart confirmation device 18. More specifically, the communication unit 172 receives the cart creation command COM2 from the behavior tracking device 14. The communication unit 172 receives the commodity purchase command COM7 or the commodity return command COM8 from the commodity identification device 15. The communication unit 172 receives the virtual cart reading command COM9 from the settlement device 16. Although details will be described later, the communication unit 172 also receives the virtual cart reading command COM9 from the cart confirmation device 18. The communication unit 172 transmits the data of one of the virtual carts VC1-VCn specified by the virtual cart reading command COM9 to the settlement device 16 or the cart confirmation device 18 which is the transmission source of the virtual cart reading command COM9.

The command analysis unit 173 analyzes the command received by the communication unit 172. When the cart creation command COM2, the commodity purchase command COM7, and the commodity return command COM8 are received, the command analysis unit 173 activates the writing unit 174. When the virtual cart reading command COM9 is received, the command analysis unit 173 activates the reading unit 176.

The writing unit 174 secures a storage area for a new virtual cart VCn (n: 1,2,3,...) in the memory unit 171 when the command analyzed by the command analyzing unit 173 is the cart creation command COM2. The writing unit 174 stores the member ID included in the cart creation command COM2 in the virtual cart VCn. The writing unit 174 also stores the date and time acquired by the clock unit 175 as the entry date and time in the virtual cart VCn.

When the command analyzed by the command analysis unit 173 is the commodity purchase command COM7, the writing unit 174 stores the data record D1 of the commodity list in the virtual cart VCn in which the member ID included in the commodity purchase command COM7 is stored. The data record D1 describes a commodity code, a commodity name, and a price of the commodity data included in the commodity purchase command COM7. Here, the in-cart flag is set to "1", and the returned flag and the cancelled flag are both set to "0". Further, the writing unit 174 rewrites the data of the total number of commodities of the virtual cart VCn so that the total number is incremented, and rewrites the data of the total amount so that the total amount includes the price of the added commodity.

When the command analyzed by the command analysis unit 173 is the commodity return command COM8, the writing unit 174 specifies the virtual cart VCn associated with the member ID included in the commodity return command COM8, and selects the data record D1 related to the commodity data included in the commodity return command COM8. Then, the write unit 174 sets the returned flag of the selected data record D1 to "1". Here, the in-cart flag of the data record D1 may be maintained (i.e., "1") or may be rewritten to "0". Further, the writing unit 174 rewrites the data of the total number of commodities of the virtual cart VCn so that the number of commodities is decremented, and rewrites the data of the total amount so as to subtract the price of the returned commodity.

When the command analyzed by the command analyzing unit 173 is the virtual cart reading command COM9, the reading unit 176 reads the data of the virtual cart VCn in which the member code included in the virtual cart reading command COM9 is stored, from the memory unit 171. Then, the reading unit 176 supplies the data of the virtual cart VCn to the communication unit 172. The communication unit 172 transmits the data of the virtual cart VCn to the settlement device 16 or the cart confirmation device 18 which is the transmission source of the virtual cart read command COM9.

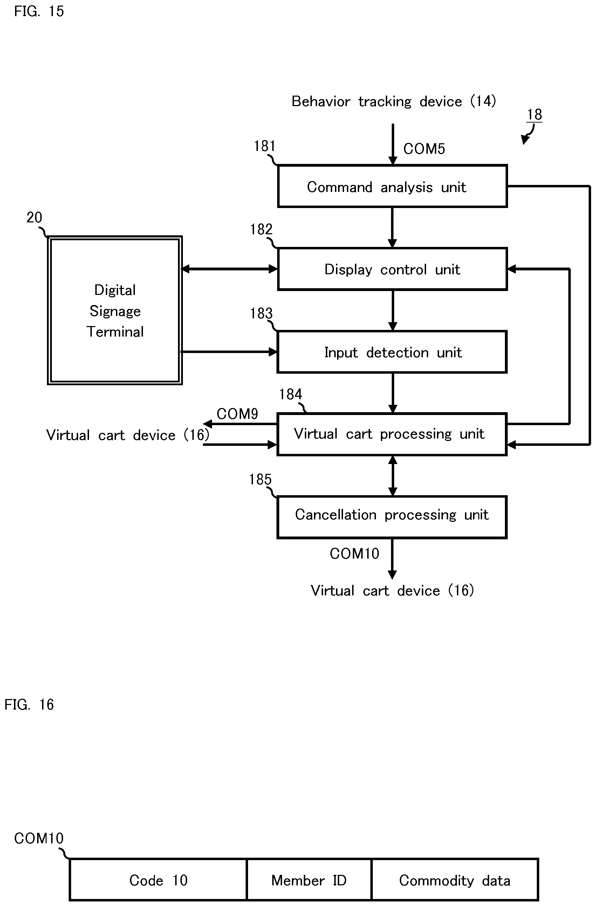

FIG. 15 is a block diagram showing a configuration of the cart confirmation device 18. The cart confirmation device 18 includes a command analysis unit 181, a display control unit 182, an input detection unit 183, a virtual cart processing unit 184, and a cancellation processing unit 185. The command analysis unit 181 analyzes the command received from the behavior tracking device 14. When the command is the cart confirmation command COM5, the command analysis unit 181 activates the display control unit 182. The command analysis unit 181 notifies the virtual cart processing unit 184 of the member ID included in the cart confirmation command COM5.

The display control unit 182 controls the screen display of the digital signage terminal 20.

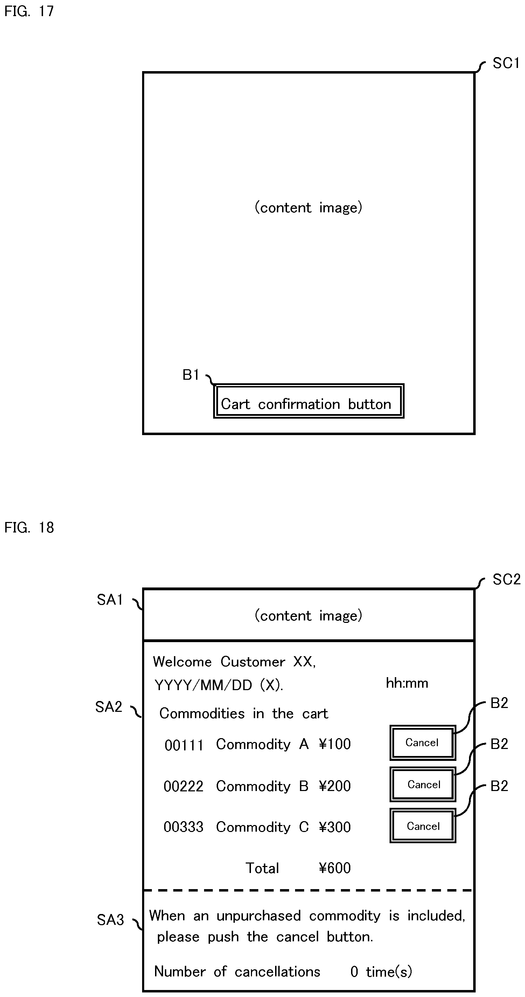

FIG. 17 shows an example of a screen SC1 controlled by the display control unit 182. In the screen SC1 of the digital signage terminal 20, an image of the content provided from the content providing device 21 is usually displayed. The display control unit 182 displays an image of a cart confirmation button B1 within the screen SC1 showing the content image.

Returning to FIG. 15, the input detection unit 183 detects an input made on the screen of the digital signage terminal 20. As shown in FIG. 17, when the image of the cart confirmation button B1 is displayed on the screen SC1 of the digital signage terminal 20, the input detection unit 183 can detect that the cart confirmation button B1 is operated. When detecting that the cart confirmation button B1 is operated, the input detection unit 183 instructs the virtual cart processing unit 184 to generate the virtual cart reading command COM9.

When receiving the instruction to generate the virtual cart reading command COM9 from the input detection unit 183, the virtual cart processing unit 184 generates the virtual cart reading command COM9. The virtual cart read command COM9 includes the member ID notified from the command analysis unit 181. The virtual cart processing unit 184 outputs the virtual cart reading command COM9 to the virtual cart device 17 to receive the data of the virtual cart VCn from the virtual cart device 17.

The virtual cart processing unit 184 processes the data of the virtual cart VCn. Specifically, the virtual cart processing unit 184 extracts the data record D1 having the in-cart flag "1" and the returned flag and the cancelled flag "0" from the data record D1 described in the commodity list. The virtual cart processing unit 184 controls the display control unit 182 to display a list image of the commodity code, the commodity name, and the price included in the extracted data record D1. The virtual cart processing unit 184 counts the number of data records D1 whose canceled flag is set to "1" from the data records D1 described in the commodity list. The virtual cart processing unit 184 controls the display control unit 182 to display the counted number as the number of cancellations.

The display control unit 182 controls the digital signage terminal 20 to update the screen display under the control of the virtual cart processing unit 184.

FIG. 18 shows an example of a screen SC2 updated by the display control unit 182. The screen SC2 of the digital signage terminal 20 includes an area SA1 representing a content image, an area SA2 representing the content of the virtual cart VCn, and an area SA3 representing the number of cancellations. The content image displayed on the screen SC1 is reduced and displayed in the area SA1. The area SA2 displays a list of the commodity codes, the commodity names, and the prices of the data record D1 extracted by the virtual cart processing unit 184. The image of the cancel button B2 is also displayed in the area SA2 in association with each commodity code and commodity name. The number of cancellations is displayed in the area SA3.

The contents displayed in the area SA2 are a list of commodities that the member facing the screen SC2 of the digital signage terminal 20 has already acquired in the selling room. Thus, the member can confirm the list of commodities to be purchased, which is managed by the virtual cart VCn, before leaving the store. Here, if the data of a commodity that has not been actually obtained is displayed in the area SA2, the member can cancel the commodity by touching the image of the cancel button B2 associated with the commodity name.

When the cancel button B2 is displayed on the screen SC2 of the digital signage terminal 20, the input detection unit 183 can detect that the cancel button B2 is input. When detecting that the cancel button B2 is input, the input detection unit 183 instructs the virtual cart processing unit 184 to generate cancellation data. The instruction to generate cancellation data includes data indicating the input of the cancel button B2 associated with the item.

When receiving the instruction to generate data, the virtual cart processing unit 184 generates cancellation data including at least the commodity ID of the commodity specified from the data included in the instruction from the input detection unit 183, and outputs the cancellation data to the cancellation processing unit 18.

The cancellation processing unit 185 performs cancellation processing based on the cancellation data. More specifically, the cancellation processing unit 185 generates a commodity cancellation command COM10, and outputs the commodity cancellation command COM10 to the virtual cart device 17.

FIG. 16 is a schematic diagram showing a data structure of the commodity cancellation command COM. As shown in the figure, the commodity cancellation command COM10 includes a command code 10, a member ID, and commodity data. The command code 10 is a code for specifying that the command is the commodity cancellation command COM10. The member ID is the one included in the cart confirmation command COM5 analyzed by the command analysis unit 181. The commodity data is the one included in the cancellation data generated by the virtual cart processing unit 184.

Returning to FIG. 13, in the virtual cart device 17 having received the commodity cancellation command COM10 via the communication unit 172, the cancellation processing of the commodity list is executed by the operations of the command analysis unit 173 and the writing unit 174. That is, the command analysis unit 173 notifies the writing unit 174 of the member code and the commodity data included in the commodity cancellation command COM10. The writing unit 174 selects the virtual cart VCn with which the member code is associated from the memory unit 171. The writing unit 174 rewrites the cancelled flag of the data record D1 in which the commodity data is stored into "1" among the data records stored in the commodity list of the virtual cart VCn. At this time, the writing unit 174 may set the in-cart flag of the data record D1 to "1" or to "0".

Returning to FIG. 15, after outputting the commodity cancellation command COM10 to the virtual cart device 17, the virtual cart processing unit 184 instructs the virtual cart processing unit 100 to re-read the virtual cart. In response to receiving the re-read command, the virtual cart processing unit 184 again outputs the virtual cart reading command COM9 to the virtual cart device 17 and read the data of the virtual cart VCn. Then, the virtual cart processing unit 184 processes the data of the virtual cart VCn in the same manner as described above. The display control unit 182, under the control of the virtual cart processing unit 184, updates the screen display of the digital signage terminal 20.

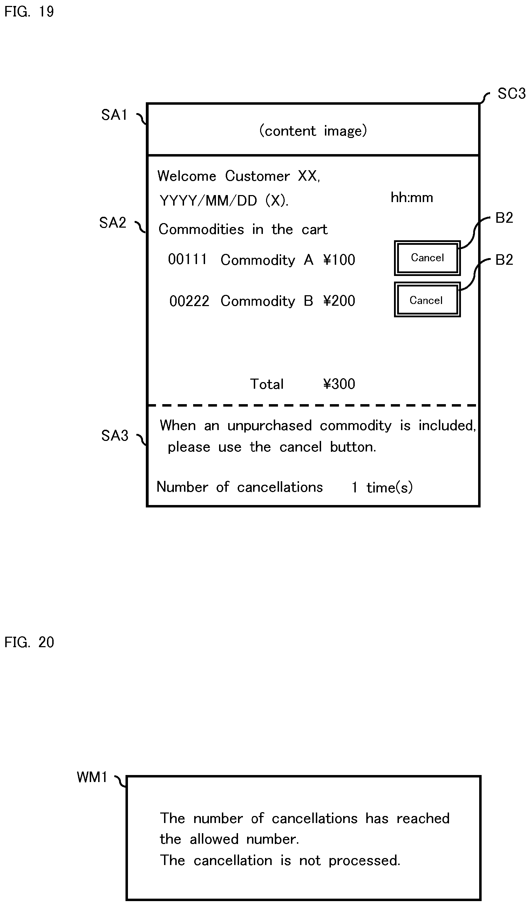

FIG. 19 shows an example of a screen SC3 after the cancellation processing is executed in response to an input of the cancel button B2 associated with the commodity C shown in the screen SC2 of FIG. 18. The data of the commodity C displayed in the area SA2 is deleted as compared with the screen SC2, and the amount of money equivalent to the price of the commodity C is reduced. Further, the number of cancellations displayed in the area SA3 is changed from 0 to 1.

Thus, when the customer notices that a commodity that is not actually taken from a commodity shelf is included in the virtual cart VCn, he or she can cancel and remove the commodity from the cart even before leaving the sales room.

However, if a customer can cancel a commodity stored in the virtual cart VCn without any restriction, there is a concern that the loss due to improper cancellation may be increased. Thus, in the present embodiment, the customer is allowed to cancel commodities up to two times in one store visit via the screen of the digital signage terminal 20.

In order to limit the number of cancellations, when the number of cancellations stored in the data record D1 reaches two, the virtual cart processing unit 184 does not generate the cancellation data even when the instruction is notified from the input detection unit 183. Instead, when the virtual cart processing unit 184 receives the instruction from the input detection unit 183 in a state where the number of cancellations reaches two, the virtual cart processing unit 102 notifies the display control unit 182 of a cancellation prohibition command. In response to receiving the cancellation prohibition command, as shown in FIG. 20, the display control unit 182 displays on the screen of the digital signage terminal 20 a message WM1 that notifies the member that the cancellation is no longer allowed because the number of cancellation operations exceeds the allowable number of times.

In this manner, even if the member confirms the contents of the virtual cart by using the digital signage terminal 20 and tries to remove a commodity improperly, it is prevented for the member to cancel three or more commodities so that the loss due to the improper cancellation can be suppressed to a low level.

The output destination of the message WM1 is not limited to the screen of the digital signage terminal 20. For example, when the store manager is present in the store, the message WM1 can be displayed on a display device monitored by the store manager. This makes it possible to further enhance the effect of suppressing the improper cancellation.

As is apparent from the above description, in the commodity data processing system 10 of the present embodiment, the gate device 13 is configured to specify a customer or a registered member who enters the sales room of the store where commodities are displayed. The behavior tracking device 14 and the commodity identification device 15 are configured to acquire commodity data related to the commodities obtained by the member by behavior tracking. The virtual cart device 17 and the settlement device 16 are configured to perform a settlement process on the commodities acquired by the member based on commodity data acquired by the behavior tracking device 14 and the commodity identification device 15 when the member exits from the sales room. The behavior tracking device 14 and the cart confirmation device 18 are configured to detect that the member faces the screen of a display device, such as a digital signage terminal 20. The virtual cart device 17 and the cart confirmation device 18 are configured to visualize a list of the commodities acquired by the member based on the acquired commodity data before the member exits from the sales room.

Also, the virtual cart device 17 and the cart confirmation device 18 are configured to accept an input of a cancellation instruction of a commodity displayed on the visualized list, remove the commodity data relating to the cancelled commodity from the virtual cart, and reject such a cancellation input when the number of cancellations exceeds a predetermined number.

According to the present embodiment provided with such functions, when a customer enters from an entrance gate a store where automatic registration and settlement processing are available, and takes some commodities from the commodity shelves, a commodity data processing system allows the customer to confirm the commodities to be purchased before he or she exits the store through the exit gate.

Moreover, according to the present embodiment, since the member can confirm a list of the commodities to be purchased by using the digital signage terminal 20 installed in the sales room, it is possible to effectively utilize the facilities in the store, thereby reducing the facility cost.

Furthermore, according to the present embodiment, since the digital signage terminal 20 displays a screen that visualizes the list of commodities that the member has obtained only when he or she faces the screen, it is not possible for another customer to see the list. Therefore, the privacy of the customers is protected, which contributes to reputation of the store reliability.

Furthermore, according to the present embodiment, if a customer notifies an error in the list, e.g., a commodity that is not taken by the customer is included in the list, the system allows the customer to correct the error by cancelling the commodity by his or her operations on the digital signage terminal 20. On the other hand, it is possible to reduce potential damages to the store due to improper cancellations by limiting the total number of cancellation operations.

While various embodiments of the commodity data processing system in which the list of commodities obtained by the customer can be confirmed before the customer leaves the store have been described above, the embodiments are not limited thereto.

In the embodiment described above, for example, a code symbol reader is provided at an entrance gate, and a code symbol displayed on a display such as a smartphone is read by the reader. In another embodiment, a reading device for reading a recording medium such as an IC card in which a member ID is recorded may be provided at the entrance gate, and the member code recorded on the recording medium owned by the member may be read by the reading device to specify the member. Alternatively, the member face passing through the entrance gate may be photographed by a camera, and the face image of the member of the captured image and the face image of the member registered in advance may be collated with each other to identify the member.

In the embodiment described above, the digital signage terminal 20 is exemplified as a display device for visualizing a list of commodities that a customer has obtained. The display device is not limited to the digital signage terminal 20. A dedicated display device for visualizing the list of commodities may be installed in the sales room. In addition, when a shopping basket dedicated to a store is used in the sales room, the list of commodities that are acquired by the customer may be visualized by a display device attached to the shopping basket. Alternatively, by registering information that can be communicated with an information terminal such as a smartphone at the time of membership registration, the list of commodities acquired by the member may be displayed on the display of the information terminal carried by the member.

In the above embodiment, when the member faces the screen of the digital signage terminal 20, the image of the cart confirmation button B1 is displayed on a part of the screen. In this regard, the image of the cart confirmation button B1 may always be displayed on a part of the screen of the digital signage terminal 20. Furthermore, a cart confirmation button B1 may be implemented as by a hardware key in an area different from the screen.

In the above embodiment, the data record D1 stored in the area of the commodity list is described as being added to the commodity data by the in-cart flag, the returned flag, and the cancelled flag. In this regard, instead of the in-cart flag, the returned flag, and the cancelled flag, a status may be added that is different among the state of the in-cart state, the returned state, and the cancellation state of the commodity.

In the commodity data processing system 10, the gate device 13 excluding the opening/closing mechanism 131 and the reader 132, the behavior tracking device 14 excluding the camera 141 and the sensor 142, the commodity identification device 15, the settlement device 16, the virtual cart device 17, and the cart confirmation device 18 each can be realized by a computer capable of performing the machine learning and the information processing related to the computer vision. That is, the components of the commodity data processing system 10 that can be realized by computers can be implemented by a plurality of programs having the functions including: specifying a customer who enters a sales room of a store where a commodity is displayed, acquiring commodity data related to a commodity obtained by the customer by tracking a behavior of the specified customer in the sales room, performing a settlement process on the commodity price of the commodity acquired by the customer based on the acquired commodity data when the identified customer exits the sales room, and visualizing a list of commodities acquired by the customer based on the acquired commodity data before the customer exits from the sales room.

The programs may be stored in the nonvolatile memory of the computer in advance and provided to a user. The programs may be recorded on a removable recording medium or provided via a communication medium such as the Internet and written into a storage device included in the computer by the user's operation. In this case, the recording medium may be a CD-ROM, a memory card, or the like, and the configuration thereof may be any configuration as long as the programs can be read by the apparatus.

While certain embodiments have been described, these embodiments have been presented by way of example only, and are not intended to limit the scope of the inventions.

## Claims

1. A commodity data processing system (10) comprising:
a reader (132) configured to read an ID of a customer;
a behavior tracking device (14) comprising a camera (141) configured to acquire images of the customer in a store and a plurality of sensors (142);
a cart confirmation device (18), and
a display (20) configured to display information about commodities;
wherein the plurality of sensors is installed on commodity shelves in the store and configured to detect movement of commodities displayed on the shelves,
the behavior tracking device further comprises a processor configured to:
identify the customer with the ID read by the reader when the customer enters the store;
track movement of the customer in the store based on the images acquired by the camera and identify one or more commodities taken by the customer in the store;
identify each commodity in response to a signal transmitted from one of the sensors that has detected the movement of the commodity;
acquire commodity data of each of the identified commodities;
after the customer has left the store, perform a settlement process for the commodities based on the acquired commodity data;
detect that the customer faces the display; and
upon detecting that the customer faces the display, generate and transmit to the cart confirmation device a cart confirmation command including a terminal code for specifying the display and the ID of the customer; and
the cart confirmation device is configured to, upon receiving the cart confirmation command from the behavior tracking device, control the display to display a list of the commodities before the customer leaves the store, the list including a name of each commodity and a cancellation button for cancelling the commodity.

2. The commodity data processing system according to claim 1, wherein
the processor is configured to
count a total number of cancellations made by the customer via the cancellation button, and
accept the cancellation only when the total number of cancellations is equal to or less than a threshold value.

3. The commodity data processing system according to claim 2, wherein
the processor is configured to control the display to display an error message when the total number of cancellations exceeds the threshold value.

4. The commodity data processing system according to claim 2 or 3, wherein
the processor is configured to control the display to display the total number of cancellations together with the list of the commodities.

5. The commodity data processing system according to any one of claims 1 to 4, wherein
the reader is installed at an entrance gate of the store.

6. The commodity data processing system according to any one of claims 1 to 5, wherein
the display is installed in a digital signage terminal in the store.

7. The commodity data processing system according to any one of claims 1 to 6,
wherein
the processor is configured to identify the customer based on the image acquired by the camera.

8. A method for processing commodity data, the method comprising:
reading by a reader an ID of a customer who enters a store;
identifying the customer with the ID read by the reader;
tracking movement of the customer in the store based on images acquired by a camera and identifying one or more commodities taken by the customer in the store;
acquiring commodity data of each of the identified commodities;
identifying each commodity in response to a signal transmitted from one of a plurality of sensors installed on commodity shelves in the store that has detected the movement of the commodity;
after the customer has left the store, performing a settlement process for the commodities based on the acquired commodity data;
detecting that the customer faces a display installed in the store based on the movement of the customer;
upon detecting that the customer faces the display, generating a cart confirmation command including a terminal code for specifying the display and the ID of the customer; and
based on the cart confirmation command, displaying on the display a list of the commodities before the customer leaves the store, the list including a name of each commodity and a cancellation button for cancelling the commodity.

9. A computer program comprising instructions which, when the program is executed by a computer, cause the computer to carry out the steps of the method according to claim 8.

10. A computer-readable medium having stored thereon the computer program of claim 9.

## Patentansprüche

1. Warendatenverarbeitungssystem (10), umfassend:
ein Lesegerät (132), das konfiguriert ist, um eine ID eines Kunden zu lesen;
eine Verhaltensverfolgungsvorrichtung (14), umfassend eine Kamera (141), die konfiguriert ist, um Bilder des Kunden in einem Ladengeschäft zu erfassen, und eine Vielzahl von Sensoren (142);
eine Einkaufswagenbestätigungsvorrichtung (18) und
eine Anzeige (20), die konfiguriert ist, um Informationen über Waren anzuzeigen;
wobei die Vielzahl von Sensoren an Warenregalen in dem Ladengeschäft installiert und konfiguriert sind, um eine Bewegung der in den Regalen ausgestellten Waren zu erfassen,
wobei die Verhaltensverfolgungsvorrichtung ferner einen Prozessor umfasst, der zu Folgendem konfiguriert ist:
Identifizieren des Kunden anhand der ID, die von dem Lesegerät gelesen wird, wenn der Kunde das Ladengeschäft betritt;
Verfolgen einer Bewegung des Kunden in dem Ladengeschäft basierend auf den Bildern, die von der Kamera aufgenommen werden, und Identifizieren einer oder mehrerer Waren, die der Kunde in dem Ladengeschäft aufnimmt;
Identifizieren jeder Ware als Reaktion auf ein Signal, das von einem der Sensoren übertragen wird, der die Bewegung der Ware erfasst hat;
Erfassen von Warendaten für jede der identifizierten Waren;
nachdem der Kunde das Ladengeschäft verlassen hat, Durchführen eines Abrechnungsprozesses für die Waren basierend auf den erfassten Warendaten;
Erfassen, dass der Kunde der Anzeige zugewandt ist; und
bei Erfassen, dass der Kunde der Anzeige zugewandt ist, Erzeugen eines Einkaufswagenbestätigungsbefehls und dessen Übertragen an die Einkaufswagenbestätigungsvorrichtung, der einen Terminalcode zum Spezifizieren der Anzeige und die ID des Kunden beinhaltet; und
wobei die Einkaufswagenbestätigungsvorrichtung konfiguriert ist, um bei Empfangen des Einkaufswagenbestätigungsbefehls von der Verhaltensverfolgungsvorrichtung die Anzeige zu steuern, um eine Liste der Waren anzuzeigen, bevor der Kunde das Ladengeschäft verlässt, wobei die Liste einen Namen jeder Ware und eine Stornierungstaste zum Stornieren der Ware beinhaltet.

2. Warendatenverarbeitungssystem nach Anspruch 1, wobei der Prozessor konfiguriert ist,
um eine Gesamtzahl von Stornierungen zu zählen, die der Kunde über die Stornierungstaste vorgenommen hat, und
die Stornierung nur dann zu akzeptieren, wenn die Gesamtzahl von Stornierungen gleich wie oder kleiner als ein Schwellenwert ist.

3. Warendatenverarbeitungssystem nach Anspruch 2, wobei
der Prozessor konfiguriert ist, um die Anzeige zu steuern, um eine Fehlermeldung anzuzeigen, wenn die Gesamtzahl von Stornierungen den Schwellenwert überschreitet.

4. Warendatenverarbeitungssystem nach Anspruch 2 oder 3, wobei
der Prozessor konfiguriert ist, um die Anzeige zu steuern, um die Gesamtzahl von Stornierungen zusammen mit der Liste der Waren anzuzeigen.

5. Warendatenverarbeitungssystem nach einem der Ansprüche 1 bis 4, wobei
das Lesegerät an einem Eingangstor des Ladengeschäfts installiert ist.

6. Warendatenverarbeitungssystem nach einem der Ansprüche 1 bis 5, wobei
die Anzeige in einem digitalen Beschilderungsterminal im Ladengeschäft installiert ist.

7. Warendatenverarbeitungssystem nach einem der Ansprüche 1 bis 6, wobei
der Prozessor ist konfiguriert ist, um den Kunden basierend auf dem von der Kamera aufgenommenen Bild zu identifizieren.

8. Verfahren zum Verarbeiten von Warendaten, das Verfahren umfassend:
Lesen, durch ein Lesegerät, einer ID eines Kunden, der ein Ladengeschäft betritt;
Identifizierung des Kunden anhand der ID, die von dem Lesegerät gelesen wird;
Verfolgen einer Bewegung des Kunden in dem Ladengeschäft basierend auf Bildern, die von einer Kamera aufgenommen werden, und Identifizieren einer oder mehrerer Waren, die von dem Kunde in dem Ladengeschäft aufgenommen werden;
Erfassen von Warendaten für jede der identifizierten Waren;
Identifizieren jeder Ware als Reaktion auf ein Signal, das von einem einer Vielzahl von Sensoren übertragen wird, die an Warenregalen in dem Ladengeschäft installiert sind und die die Bewegung der Ware erfasst haben;
nachdem der Kunde das Ladengeschäft verlassen hat, Durchführen eines Abrechnungsprozesses für die Waren basierend auf den erfassten Warendaten;
Erfassen, dass der Kunde einer Anzeige zugewandt ist, die in dem Ladengeschäft installiert, basierend auf der Bewegung des Kunden;
bei Erfassen, dass der Kunde der Anzeige zugewandt ist, Erzeugen eines Einkaufswagenbestätigungsbefehls, der einen Terminalcode zum Spezifizieren der Anzeige und die ID des Kunden beinhaltet; und
basierend auf dem Einkaufswagenbestätigungsbefehl, Anzeigen einer Liste der Waren auf der Anzeige, bevor der Kunde das Ladengeschäft verlässt, wobei die Liste einen Namen jeder Ware und eine Stornierungstaste zum Stornieren der Ware beinhaltet.

9. Computerprogramm, umfassend Anweisungen, die, wenn das Programm von einem Computer ausgeführt wird, den Computer veranlassen, die Schritte des Verfahrens nach Anspruch 8 durchzuführen.

10. Computerlesbares Medium, auf dem das Computerprogramm nach Anspruch 9 gespeichert ist.

## Revendications

1. Système de traitement de données de marchandises (10) comprenant :
un lecteur (132) configuré de manière à lire un identifiant (ID) d'un client ;
un dispositif de suivi de comportement (14) comprenant une caméra (141) configurée de manière à acquérir des images du client dans un magasin, et une pluralité de capteurs (142) ;
un dispositif de confirmation de panier (18) ; et
un afficheur (20) configuré de manière à afficher des informations relatives à des marchandises ;
dans lequel les capteurs de la pluralité de capteurs sont installés sur des rayons de marchandises dans le magasin et sont configurés de manière à détecter le déplacement des marchandises exposées sur les rayons ;
le dispositif de suivi de comportement comprend en outre un processeur configuré de manière à :
identifier le client au moyen de l'identifiant (ID) lu par le lecteur lorsque le client entre dans le magasin ;
suivre le déplacement du client dans le magasin sur la base des images acquises par la caméra et identifier une ou plusieurs marchandises prises par le client dans le magasin ;
identifier chaque marchandise en réponse à un signal transmis par l'un des capteurs qui a détecté le déplacement de la marchandise ;
acquérir des données de marchandises de chacune des marchandises identifiées ;
après que le client a quitté le magasin, mettre en œuvre un processus de règlement pour les marchandises sur la base des données de marchandises acquises ;
détecter que le client fait face à l'afficheur ; et
après avoir détecté que le client fait face à l'afficheur, générer et transmettre, au dispositif de confirmation de panier, une instruction de confirmation de panier incluant un code de terminal pour spécifier l'afficheur et l'identifiant (ID) du client ; et
le dispositif de confirmation de panier est configuré de manière à, suite à la réception de l'instruction de confirmation de panier provenant du dispositif de suivi de comportement, commander l'afficheur afin d'afficher une liste des marchandises avant que le client ne quitte le magasin, la liste incluant un nom de chaque marchandise et un bouton d'annulation pour annuler la marchandise.

2. Système de traitement de données de marchandises selon la revendication 1, dans lequel :
le processeur est configuré de manière à :
compter un nombre total d'annulations effectuées par le client par l'intermédiaire du bouton d'annulation ; et
accepter l'annulation uniquement lorsque le nombre total d'annulations est égal ou inférieur à une valeur de seuil.

3. Système de traitement de données de marchandises selon la revendication 2, dans lequel :
le processeur est configuré de manière à commander l'affichage afin d'afficher un message d'erreur lorsque le nombre total d'annulations dépasse la valeur de seuil.

4. Système de traitement de données de marchandises selon la revendication 2 ou 3, dans lequel :
le processeur est configuré de manière à commander l'affichage afin d'afficher le nombre total d'annulations conjointement avec la liste des marchandises.

5. Système de traitement de données de marchandises selon l'une quelconque des revendications 1 à 4, dans lequel :
le lecteur est installé au niveau d'une porte d'entrée du magasin.

6. Système de traitement de données de marchandises selon l'une quelconque des revendications 1 à 5, dans lequel :
l'afficheur est installé dans un terminal de signalisation numérique dans le magasin.

7. Système de traitement de données de marchandises selon l'une quelconque des revendications 1 à 6, dans lequel :
le processeur est configuré de manière à identifier le client sur la base de l'image acquise par la caméra.

8. Procédé de traitement de données de marchandises, le procédé comprenant le fait de :
lire, par le biais d'un lecteur, un identifiant (ID) d'un client qui entre dans un magasin ;
identifier le client au moyen de l'identifiant (ID) lu par le lecteur ;
suivre le déplacement du client dans le magasin sur la base d'images acquises par une caméra et identifier une ou plusieurs marchandises prises par le client dans le magasin ;
acquérir des données de marchandises de chacune des marchandises identifiées ;
identifier chaque marchandise en réponse à un signal transmis par un capteur d'une pluralité de capteurs installés sur les rayons de marchandises dans le magasin qui a détecté le déplacement de la marchandise ;
après que le client a quitté le magasin, mettre en œuvre un processus de règlement pour les marchandises sur la base des données de marchandises acquises ;
détecter que le client fait face à un afficheur installé dans le magasin sur la base du déplacement du client ;
après avoir détecté que le client fait face à l'afficheur, générer une instruction de confirmation de panier incluant un code de terminal pour spécifier l'afficheur et l'identifiant (ID) du client ; et
sur la base de la commande de confirmation de panier, afficher sur l'afficheur une liste des marchandises avant que le client ne quitte le magasin, la liste incluant un nom de chaque marchandise et un bouton d'annulation pour annuler la marchandise.

9. Programme informatique comprenant des instructions qui, lorsque le programme est exécuté par un ordinateur, amènent l'ordinateur à mettre en œuvre les étapes du procédé selon la revendication 8.

10. Support lisible par ordinateur sur lequel est stocké le programme informatique selon la revendication 9.
